# EUROPEAN PATENT APPLICATION

(11) **EP 4 137 289 A1**
(43) Date of publication of application: **22.02.2023**
(21) Application number: 21787678.8
(22) Date of filing: 13.04.2021
(51) Int. Cl.: B29C 33/76, B29C 70/54

(54) **CORE AND METHOD FOR MOLDING STRUCTURE**

(30) Priority: 13.04.2020 US 202063009149 P
(71) Applicant: KAWASAKI JUKOGYO KABUSHIKI KAISHA, Kobe-shi, Hyogo 650-8670 (JP)
(72) Inventor: OKUMURA, Kenshirou, Kobe-shi, Hyogo 650-8670 (JP); HAMAMOTO, Takaya, Kobe-shi, Hyogo 650-8670 (JP); SANA, Toshikazu, Kobe-shi, Hyogo 650-8670 (JP)
(74) Representative: Leinweber & Zimmermann
(86) International application number: PCT/JP2021/015317
(87) International publication number: WO 2021/210580

(57) **Abstract**

A core according to one aspect of the present disclosure is a core that is inserted into a space between a skin and a stringer in a step of integrally molding the skin and the stringer, the skin including fiber-reinforced resin, the stringer having a hat-shaped section that is open toward the skin. The core includes: a first die that extends along a longitudinal direction of the stringer and contacts the skin; and a second die that extends along the longitudinal direction of the stringer and is located at an opposite side of the skin across the first die. The second die includes a material that is softer than the first die. The second die includes a slit perpendicular to the longitudinal direction of the stringer.

## Description

### Technical Field

The present disclosure relates to a core used in a step of forming a structural body including fiber-reinforced resin and a method of forming the structural body by using the core.

### Background Art

A structural body formed by integrally molding a skin made of fiber-reinforced resin and a beam-shaped stringer has been devised. As the stringer, a stringer having a hat-shaped section that is open toward the skin can be used. The stringer having the hat-shaped section is advantageous in that this stringer easily follows a change in the section of the structural body and has high strength for its weight. However, in the step of integrally molding the skin and the stringer having the hat-shaped section, a core needs to be inserted in a space between the skin and the stringer (see PTL 1, for example).

### Citation List

### Patent Literature

PTL 1: Japanese Laid-Open Patent Application Publication No. 2015-142993

### Summary of Invention

### Technical Problem

In the step of integrally molding the skin and the stringer, large force may be partially applied to an outer surface of the skin. Therefore, it is desirable that a surface of the core which supports the skin, i.e., a surface of the core which contacts the skin be not partially deformed. However, the core made of a hard material is low in flexibility, and therefore, it is not easy to pull out the core after the forming.

The present disclosure was made under these circumstances, and an object of the present disclosure is to provide a core that is easily pulled out after forming and includes a surface which contacts a skin and is hardly partially deformed, and also provide a method of forming a structural body.

### Solution to Problem

A core according to one aspect of the present disclosure is a core that is inserted into a space between a skin and a stringer in a step of integrally molding the skin and the stringer, the skin including fiber-reinforced resin, the stringer having a hat-shaped section that is open toward the skin. The core includes: a first die that extends along a longitudinal direction of the stringer and contacts the skin; and a second die that extends along the longitudinal direction of the stringer, is located at an opposite side of the skin across the first die, and is larger in thickness than the first die. The second die includes a material that is softer than the first die. The second die includes a slit perpendicular to the longitudinal direction of the stringer.

According to this configuration, the first die that contacts the skin is made of a relatively hard material. Therefore, a surface of the first die which contacts the skin can be prevented from being partially deformed. Moreover, the second die located at an opposite side of the skin is made of a relatively soft material and includes the slit. Therefore, the second die easily follows the displacement of the space between the skin and the stringer. As a result, the core is easily pulled out after the forming.

A method of forming a structural body according to one aspect of the present disclosure includes: inserting the core into the space between the skin and the stringer; in this state, integrally molding the skin and the stringer; and then, pulling out the core from the space.

According to this forming method, the first die that contacts the skin is made of a relatively hard material. Therefore, a surface of the first die which contacts the skin can be prevented from being partially deformed. Moreover, the second die located at an opposite side of the skin is made of a relatively soft material and includes the slit. Therefore, the second die easily follows the displacement of the space between the skin and the stringer. As a result, the core is easily pulled out after the forming.

### Advantageous Effects of Invention

According to the above configuration, the present disclosure can provide a core that is easily pulled out after forming and includes a surface which contacts a skin and is hardly partially deformed, and also provide a method of forming a structural body.

### Brief Description of Drawings

FIG. 1 is a front view of a structural body formed by using a core.
FIGS. 2A to 2G are diagrams showing a step of forming the structural body.
FIG. 3 is a front view of the core.
FIG. 4 is a sectional view taken along line IV-IV of FIG. 3.
FIG. 5 is a front view of the core according to Modified Example.

### Description of Embodiments

### Structural Body

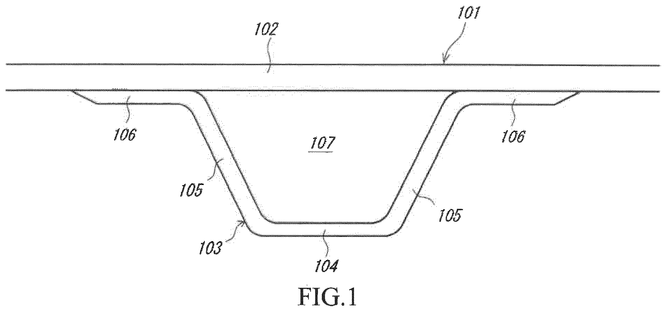

Hereinafter, a core 100 according to the present embodiment will be described. First, a structural body 101 formed by using the core 100 will be described. FIG. 1 is a front view of the structural body 101 and shows a part of the structural body 101. As one example, the structural body 101 is an airframe of an aircraft. The structural body 101 includes a skin 102 and stringers 103. FIG. 1 shows one of the stringers 103. The shape of the structural body 101 is not limited and may be a flat plate shape or a cylindrical shape.

The skin 102 is a portion corresponding to a surface of the structural body 101. In the present embodiment, the thickness of the skin 102 is not constant. The skin 102 is formed in such a manner that: sheet-shaped prepregs are prepared by impregnating fibers, such as carbon, with resin; and the prepregs are laminated on each other and are cured. To be specific, the skin 102 is made of fiber-reinforced resin. The thickness of the skin 102 can be adjusted by the number of prepregs laminated. The resin of the skin 102 of the present embodiment is thermoplastic resin but may be thermosetting resin.

The stringer 103 is a portion which is located inside the skin 102 and formed integrally with the skin 102. The stringer 103 serves as a beam and extends in a predetermined direction (direction perpendicular to a paper surface of FIG. 1). When the structural body 101 has a tubular shape, the stringer 103 extends along an axial direction of the structural body 101. The stringer 103 of the present embodiment is made of the same material (i.e., the fiber-reinforced resin) as the skin 102. However, the stringer 103 may be made of a different material from the skin 102. For example, the stringer 103 may be made of an invar alloy.

Hereinafter, a direction in which the stringer 103 extends is referred to as a "longitudinal direction," and a section perpendicular to the longitudinal direction is simply referred to as a "section." A direction in which the skin 102 extends in a sectional view is referred to as a "width direction," and a direction along a perpendicular line of the skin 102 in the sectional view is referred to as a "perpendicular direction." In some cases, the perpendicular direction does not coincide with a vertical direction.

The stringer 103 has a hat-shaped section that is open toward the skin 102. Specifically, the stringer 103 includes a bottom surface portion 104, two side surface portions 105, and two flange portions 106. The bottom surface portion 104 is located farthest from the skin 102. The two side surface portions 105 extend from both width direction ends of the bottom surface portion 104 toward the skin 102. The two flange portions 106 extend from the respective side surface portions 105 outward in the width direction while contacting the skin 102. The two side surface portions 105 are inclined relative to the perpendicular direction so as to extend away from each other in the width direction.

Since the skin 102 and the stringer 103 are as above, a space 107 is between the skin 102 and the stringer 103. The space 107 extends in the longitudinal direction and has a trapezoidal shape in the sectional view. In a step of integrally molding the skin 102 and the stringer 103, the core 100 is inserted into the space 107.

### Step of Forming Structural Body

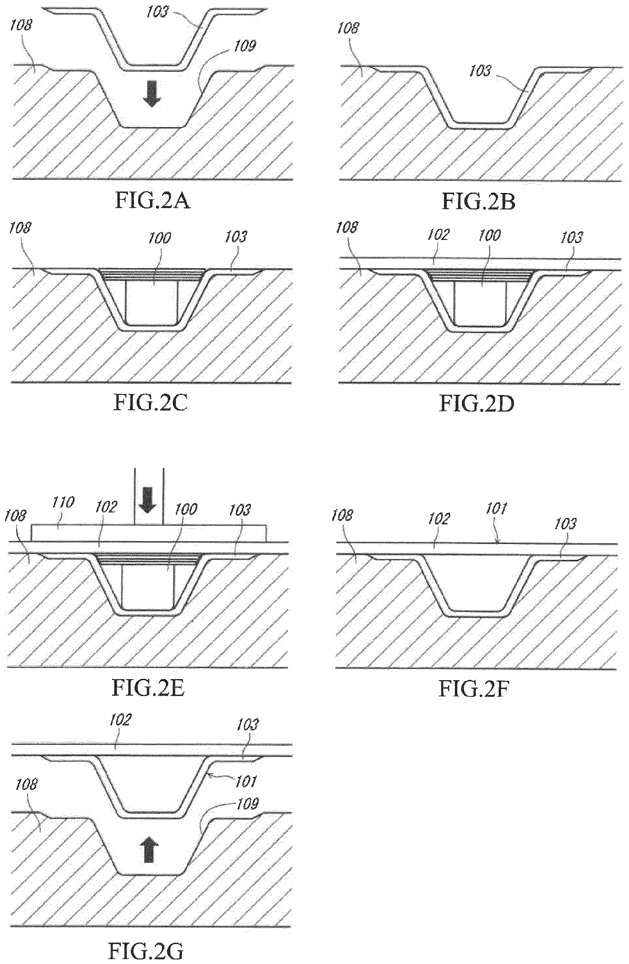

Next, a step of forming the above structural body 101, i.e., the step of integrally molding the skin 102 and the stringer 103 will be described. FIGS. 2A to 2G are diagrams showing the step of forming the structural body 101. The below-described step of forming the structural body 101 is one example in which the skin 102 is made of thermoplastic resin. For example, when the skin 102 is made of thermosetting resin, a different step is performed.

In the forming step of the present embodiment, first, as shown in FIGS. 2A and 2B, the stringer 103 is placed in a groove 109 of a base die 108 prepared in advance. The base die 108 has a shape corresponding to the shape of the completed structural body 101. For example, the base die 108 has a plate shape or a semi-circular section. Next, as shown in FIG. 2C, the core 100 is inserted into the stringer 103. Details of the core 100 will be described later.

Next, as shown in FIG. 2D, the skin 102 is formed along the surface of the base die 108 and the surface of the core 100. As described above, the skin 102 is formed by laminating the prepregs. At this time, the skin 102 is not yet cured and is not yet joined to the stringer 103.

Next, as shown in FIG. 2E, heat is applied to the skin 102, and force is applied to the surface of the skin 102 with a pressurizer 110. At this time, the force is partially applied to the skin 102. Moreover, the temperature of the skin 102 becomes a high temperature, such as 350°C. As above, when the skin 102 is pressurized while being heated, the skin 102 is cured and joined to the stringer 103. To be specific, the skin 102 and the stringer 103 are integrally molded.

Next, as shown in FIG. 2F, the core 100 is pulled out from the space 107 between the skin 102 and the stringer 103. Finally, as shown in FIG. 2G, the structural body 101 in which the skin 102 and the stringer 103 are integrated with each other is taken out from the base die 108. This is the step of forming the structural body 101.

### Core

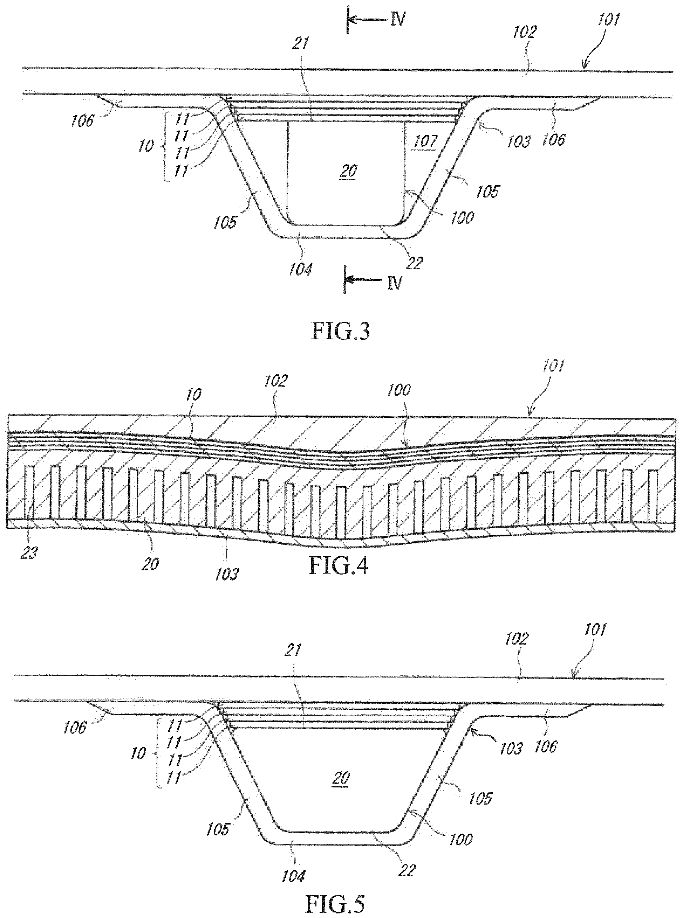

Next, the core 100 according to the present embodiment will be described. FIG. 3 is a front view of the skin 102 and the core 100. FIG. 4 is a sectional view taken along line IV-IV of FIG. 3. FIGS. 3 and 4 show that the core 100 is in the space 107 between the skin 102 and the stringer 103. The same is true in FIG. 5 described later.

As described above, the thickness of the skin 102 of the present embodiment is not constant and varies depending on the position in the longitudinal direction. As a result, the space 107 between the skin 102 and the stringer 103 is displaced as it extends in the longitudinal direction. The core 100 according to the present embodiment can be utilized for the forming of the structural body 101.

As shown in FIG. 3, the core 100 according to the present embodiment includes a first die 10 and a second die 20 which are separable from each other.

The first die 10 is a die that contacts the skin 102 and extends in the longitudinal direction. The first die 10 of the present embodiment includes plates 11 laminated on each other in the perpendicular direction. The number of plates 11 in the first die 10 is not especially limited but is desirably three or more. When three or more plates 11 are laminated on each other, there exists the plate 11 sandwiched between the plates 11. When the surfaces of the plates 11 are made smooth, the plate 11 between the plates 11 can be easily pulled out.

Moreover, a dimension of each plate 11 of the first die 10 in the width direction is not especially limited. However, it is desirable that to surely support the skin 102, the dimension of each plate 11 in the width direction be set such that a gap between the plate 11 and the stringer 103 (the flange portion 106 or the side surface portion 105) becomes small. When width direction end portions of the plates 11 contact the stringer 103, the plates 11 are supported by the stringer 103, and therefore, stabilized.

In the step of forming the structural body 101, force is partially applied to the skin 102 (see FIG. 2E). Therefore, it is desirable that the first die 10 (i.e., the plates 11) be made of a relatively hard material so as not to be partially deformed. Moreover, the first die 10 needs to be made of a material that can withstand the heat applied in the step of forming the structural body 101. Furthermore, it is desirable that the surfaces of the first die 10 be smooth such that the friction of the first die 10 with the skin 102 when the core 100 is pulled out does not become large. Based on these, the first die 10 may include stainless steel.

When the first die 10 is made of a relatively hard material, the first die 10 becomes low in flexibility, and therefore, it may not be easy to pull out the core after the forming. However, in the present embodiment, since the plates 11 of the first die 10 can be made thin, the plates 11 are high in flexibility. Therefore, the plates 11 are easily pulled out after the forming, and therefore, the core 100 is easily pulled out.

The second die 20 is a die that is located at an opposite side of the skin 102 across the first die 10. The second die 20 extends in the longitudinal direction and has a rectangular section. However, as shown in FIG. 5, the second die 20 may have a trapezoidal sectional shape corresponding to the sectional shape of the stringer 103. Moreover, the second die 20 of the present embodiment is larger in thickness (dimension in the perpendicular direction) than the first die 10.

An upper surface 21 of the second die 20 contacts the first die 10, and a lower surface 22 of the second die 20 contacts the bottom surface portion 104 of the stringer 103. A structure (not shown) may be between the second die 20 and the first die 10 or between the second die 20 and the bottom surface portion 104 of the stringer 103.

The second die 20 of the present embodiment includes a material that is softer than the first die 10. Since the first die 10 is between the second die 20 and the skin 102, the force partially applied to the skin 102 is dispersedly transmitted to the second die 20. Thus, the force is not partially applied to the second die, and therefore, the second die does not have to have high hardness unlike the first die 10. To pull out the second die 20, high hardness is rather undesirable. Moreover, the second die 20 also needs to be made of a material that can withstand the heat applied in the step of forming the structural body 101. Based on these, the second die 20 may include fluorocarbon resin, polyimide, or aluminum.

Moreover, the second die 20 of the present embodiment includes slit 23 perpendicular to the longitudinal direction. With this, portions of the second die 20 which are adjacent to each other across the slit 23 can be displaced relative to each other. As a result, the core 100 according to the present embodiment easily follows the displacement of the space 107 between the skin 102 and the stringer 103 and is easily pulled out. The number of slits 23 of the second die 20 is not limited.

In the present embodiment, the slit 23 is open on the lower surface 22 of the second die 20 and extends from the lower surface 22 toward the skin 102. However, the slit 23 may be open on the the upper surface 21 of the second die 20 and extend toward the bottom surface portion 104 of the stringer 103. Furthermore, a dimension of the slit 23 in the perpendicular direction is not limited, and may be, for example, 50% or more of a dimension of the second die 20 in the perpendicular direction.

The foregoing has described the core 100 according to the present embodiment. In the present embodiment, in the work of pulling out the core 100 in the step of forming the structural body 101, first, the plate 11 that is most easily pulled out is pulled out, i.e., the plate 11 between the plates 11 is pulled out. Next, the plates 11 each of which is not between the plates 11 is pulled out. Finally, the second die 20 is pulled out. Since these structures easily follow the displacement of the space 107 between the skin 102 and the stringer 103, the structures can be easily pulled out.

### Conclusion

As above, the core according to the embodiment is a core that is inserted into a space between a skin and a stringer in a step of integrally molding the skin and the stringer, the skin including fiber-reinforced resin, the stringer having a hat-shaped section that is open toward the skin. The core includes: a first die that extends along a longitudinal direction of the stringer and contacts the skin; and a second die that extends along the longitudinal direction of the stringer and is located at an opposite side of the skin across the first die. The second die includes a material that is softer than the first die. The second die includes a slit perpendicular to the longitudinal direction of the stringer.

According to this configuration, the first die that contacts the skin is made of a relatively hard material. Therefore, a surface of the first die which contacts the skin can be prevented from being partially deformed. Moreover, the second die located at an opposite side of the skin is made of a relatively soft material and includes the slit. Therefore, the second die easily follows the displacement of the space between the skin and the stringer. As a result, the core is easily pulled out after the forming.

Moreover, in the core according to the embodiment, the first die includes plates laminated on each other in a direction along a perpendicular line of the skin.

According to this configuration, the first die includes the plates. Therefore, the first die easily follows the displacement of the space between the skin and the stringer. As a result, the core is easily pulled out after the forming.

Moreover, in the core according to the embodiment, a thickness of the second die in a direction along a perpendicular line of the skin is larger than a thickness of the first die in the direction along the perpendicular line of the skin.

According to this configuration, a ratio of the second die, which is made of a relatively soft material and includes the slit, to the entire core is large. Therefore, the core is further easily pulled out after the forming.

Moreover, in the core according to the embodiment, the first die includes stainless steel, and the second die includes fluorocarbon resin, polyimide, or aluminum.

According to this configuration, the core can withstand the heat applied in the step of integral molding and can reduce the friction generated when being pulled out.

### Reference Signs List

- 10: first die
- 11: plate
- 20: second die
- 23: slit
- 100: core
- 101: structural body
- 102: skin
- 103: stringer
- 107: space

## Claims

1. A core that is inserted into a space between a skin and a stringer in a step of integrally molding the skin and the stringer, the skin including fiber-reinforced resin, the stringer having a hat-shaped section that is open toward the skin,
the core comprising:
a first die that extends along a longitudinal direction of the stringer and contacts the skin; and
a second die that extends along the longitudinal direction of the stringer and is located at an opposite side of the skin across the first die, wherein:
the second die includes a material that is softer than the first die; and
the second die includes a slit perpendicular to the longitudinal direction of the stringer.

2. The core according to claim 1, wherein the first die includes plates laminated on each other in a direction along a perpendicular line of the skin.

3. The core according to claim 1 or 2, wherein a thickness of the second die in a direction along a perpendicular line of the skin is larger than a thickness of the first die in the direction along the perpendicular line of the skin.

4. The core according to any one of claims 1 to 3, wherein:
the first die includes stainless steel; and
the second die includes fluorocarbon resin, polyimide, or aluminum.

5. A method of forming a structural body,
the method comprising:
inserting the core according to any one of claims 1 to 4 into the space between the skin and the stringer;
in this state, integrally molding the skin and the stringer; and
then, pulling out the core from the space.
